# EUROPEAN PATENT SPECIFICATION

(11) **EP 2 056 952 B1**
(45) Date of publication and mention of the grant of the patent: **19.04.2017**
(21) Application number: 07789205.7
(22) Date of filing: 14.08.2007
(51) Int. Cl.: B01D 45/08

(54) **SILENCER SUB-ASSEMBLY FOR A VACUUM PUMP OIL SEPARATOR**
SCHALLDÄMPFERUNTERBAUGRUPPE FÜR EINEN VAKUUMPUMPENÖLABSCHEIDER
SOUS-ASSEMBLAGE DE SILENCIEUX POUR SÉPARATEUR D'HUILE DE POMPE À VIDE

(30) Priority: 14.08.2006 GB 0616143; 18.04.2007 GB 0707524
(43) Date of publication of application: 13.05.2009
(73) Proprietor: Walker Filtration Limited, Washington, Tyne & Wear NE37 3ES (GB)
(72) Inventor: MERRIE, Kenneth, Houghton-le-spring Tyne And Wear DH5 8NX (GB); ILEY, Steven, Houghton-le-spring Tyne And Wear DH5 9SE (GB)
(74) Representative: Gill, Stephen Charles
(86) International application number: PCT/GB2007/003079
(87) International publication number: WO 2008/020186

(56) References cited:
- GB-A- 1 490 590
- US-A- 5 246 473
- US-A1- 2003 070 553

## Description

The present invention relates to a silencer sub-assembly for a vacuum pump oil separator.

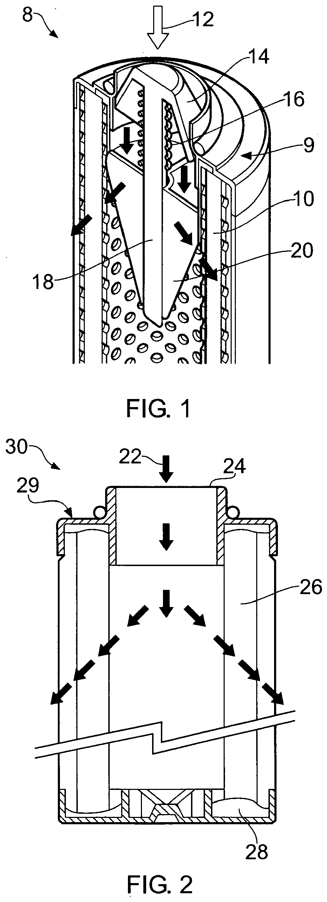

Oil separators are used in pumps such as vacuum pumps to recover lubricating oil carried by a gas stream. An oil separator 8, such as that illustrated in Fig. 1, typically includes a filter element 10 comprising filter media (for example, glass microfibre) arranged in an annular cylindrical shape. An oil-carrying gas stream 12 enters the separator 8 via an annular opening in an end cap 9 formed at the top of the separator and exits by passing through the filter element. A disadvantage of such oil separators is the noise they can generate during operation. In particular, new oil separators are known to generate high levels of noise during the period following their initial installation (known as the "wetting out" period).

The noise generated by oil separators can be reduced by use of a silencer such as that fitted to the oil separator 8 of Fig. 1 which includes valve 14, spring 16, shaft 18 and stabilising elements 20. The gas stream 14 generates a pressure difference across valve 14 which is biased towards a closed position by the action of spring 16. To keep the valve centred, shaft 18 is connected to the valve and slides within the channel formed by stabilising elements 20. When the pressure difference across the valve is high enough, the valve is pushed internally against the action of the spring and the gas stream is able to enter the separator. In the process, the gas stream becomes annular in form and some of its energy is dissipated.

A disadvantage of such a silencer identified by the present inventors is that it forms a unitary piece with the separator. It is also complicated and expensive to manufacture. The requirement for the widest diameter of the valve to be greater than the smallest diameter of the inlet opening of the separator means the silencer must be assembled at the same time as the separator is formed.

A further disadvantage of a silencer such as that illustrated in Fig. 1 is the number of independent parts which must be fitted to the separator. This can make the assembly process complex and time-consuming.

US 2003/0070553 proposes a device to reduce or eliminate noise. GB A 1490590 proposes an apparatus for separating oil drops from vapour.

The present invention seeks to improve on such known silencers.

In a first aspect the present invention provides a silencer sub-assembly for a vacuum pump oil separator according to claim 1.

By dividing, or splitting, the inlet gas stream in this way, the energy of the stream may be dissipated and its noise reduced. Further, significant restriction to the flow of the gas stream can be avoided.

The following are optional or preferred features of the invention which may be applied alone or together in any combination to the first aspect.

At least some of the gas flow channels have different lengths. In this way, the silencing, or vibration damping, effect of the silencer is improved.

Preferably, the baffle forms an impingement surface for the inlet gas stream which surface is inclined relative to the flow direction of the inlet gas stream. Further, the impingement surface is preferably in the shape of a cone or frusto-cone, or is substantially paraboloid in shape. In some embodiments, the impingement surface narrows in the flow direction of the inlet gas stream, although in other embodiments, the impingement surface narrows in the reverse direction to the flow direction of the inlet gas stream.

The sub-assembly may have an exit surface in which exit holes for the gas flow channels are formed. In some embodiments, the exit surface is perpendicular to the flow direction of the inlet gas stream. In other embodiments, the exit surface is inclined relative to the flow direction of the inlet gas stream. For example, the exit surface can be in the shape of a cone or frusto-cone, or be substantially paraboloid in shape. Further, the exit surface can narrow in the flow direction of the inlet gas stream, or it can narrow in the reverse direction to the flow direction of the inlet gas stream.

Preferably, the sub-assembly includes a gas diverging member which projects from the baffle upstream into the inlet gas stream. When the impingement surface of the baffle is in the shape of a cone, frusto-cone or paraboloid, the gas diverging member preferably projects from the narrow end of the cone, frusto-cone or paraboloid along a central axis of the impingement surface.

In embodiments of the sub-assembly having an exit surface, a gas diverging member may also be provided which projects downstream from that surface. When the exit surface is in the shape of a cone, frusto-cone or paraboloid, the gas diverging member preferably projects from the narrow end of the cone, frusto-cone or paraboloid along a central axis of the exit surface.

The sub-assembly may be formed as a unitary piece with the separator. Separators are typically produced with end caps at opposing ends of a filter element. The sub-assembly may, for example, be integral with an end cap of the separator.

However, most preferably, the sub-assembly is retro-fittable (e.g. as a separate component) to the separator.

In this way, the silencer sub-assembly is connectable to the separator as, or after, the final stage in the assembly of the separator. Thus, advantageously, and in contrast to the separator of Fig. 1, a separator with such a silencer can be easily adapted to situations where different silencers or even no silencer are required.

Preferably, the sub-assembly is adapted to provide a snap-fit connection with the separator. Further, the sub-assembly preferably has a plurality of snap-fit connection members to provide the snap-fit connection. Furthermore, each connection member preferably has a barbed portion for coupling to the separator. The barbed portions may be at the respective ends of resiliently deformable elongate members.

However, other means of connecting the sub-assembly to the separator may be employed, including, for example, screw or bayonet connection, welding, gluing, interference fit etc.

Preferably, the sub-assembly further includes a sealing member arranged to provide a seal between the sub-assembly and the separator.

In a further aspect, the present invention provides a vacuum pump oil separator fitted with a silencer sub-assembly according to the first or second aspect.

Thus, for example, in some embodiments a vacuum pump oil separator may be fitted with a silencer sub-assembly according to the first aspect, in which the baffle of the sub-assembly intercepts an oil-carrying inlet gas stream to the separator and the baffle has a plurality of holes which divide the gas stream into sub-streams, each hole forming the entrance to a gas flow channel that directs a respective sub-stream into the separator.

And, in other embodiments, a vacuum pump oil separator may be fitted with a silencer according to the second aspect, in which the separator operates on an oil-carrying inlet gas stream to the separator and the sub-assembly is retro-fitted to the separator.

In another aspect, the present invention provides a vacuum pump fitted with a vacuum pump oil separator and silencer sub-assembly according to the first or second aspect.

In another aspect, the present invention provides the use of a vacuum pump oil separator and silencer sub-assembly according to the first or second aspect for separating oil from an oil-carrying inlet gas stream from a vacuum pump.

Optional or preferred features of the first aspect described herein pertain also to the above aspects.

Preferred embodiments of the invention will now be described by way of example, with reference to the accompanying drawings, in which:
Fig. 1 is an isometric view with cut-away section of an assembly of a known vacuum pump oil separator and silencer;
Fig. 2 is a cross-sectional view of a vacuum pump oil separator with no silencer sub-assembly;
Figs. 3a and b are respective cross-sectional views of vacuum pump oil separators and silencer sub-assemblies according to first and second embodiments of the present invention;
Fig. 4 is an isometric view of the silencer sub-assembly of Fig. 3a; and
Fig. 5 is a bar chart demonstrating the results of noise generation tests on vacuum pump oil separators without silencers and with silencers according to embodiments of the present invention.

Fig. 2 is a cross-sectional view of a vacuum pump oil separator without a silencer sub-assembly. Were the separator to be used in this state, an oil-carrying inlet gas stream 22 would enter the separator 30 via an opening 24 in end cap 29 at the top of the separator and exit by passing through filter element 26. The separated oil 28 would drain by gravity pool at the base of the separator, from where it could be recovered.

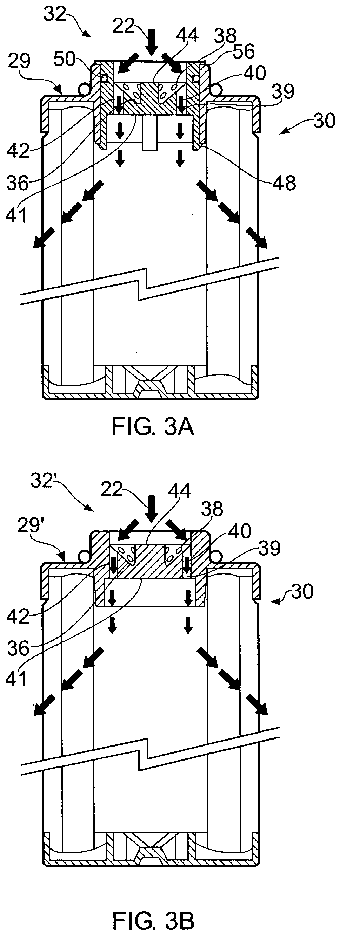

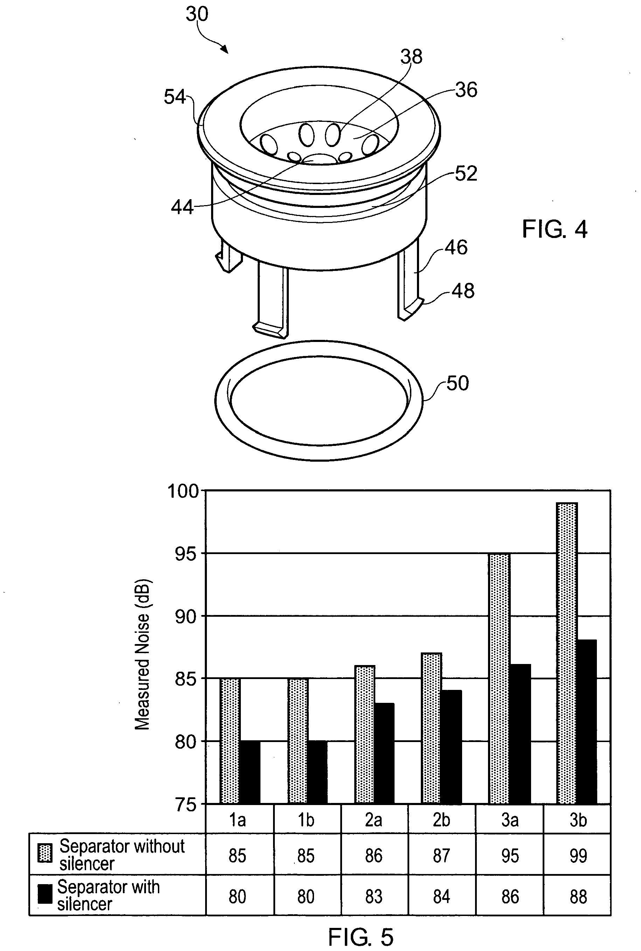

When silencer 32 is fitted to end cap 29 of separator 30, as shown in the embodiment of Fig. 3a, oil-carrying inlet gas stream 22 is intercepted by baffle 36. The baffle forms an impingement surface for the inlet gas stream, and has a plurality of holes 38 which divide the intercepted gas stream into a plurality of sub-streams 40. Each hole forms an entrance to a gas flow channel 42 which directs a gas sub-stream into separator 30. The gas streams exit the silencer through holes 39 in exit surface 41, which is perpendicular to the direction of the inlet gas stream (although an inclined exit surface may be used). Only two gas flow channels 42 are shown in the cross-sectional view of Fig. 3a. Fig. 4 is an isometric view of the silencer of Fig. 3a.

Fig. 3b shows an alternative embodiment which is similar to the embodiment of Fig. 3a except that the silencer 32' is now formed as an integral part of end cap 29'. That is, silencer 32' and end cap 29' are unitary.

In both embodiments, the impingement surface of the baffle is inclined relative to the flow direction of the inlet gas stream. In the embodiments, the impingement surface is in the shape of a frusto-cone which narrows in the flow direction of the inlet gas stream, but it may alternatively widen in the flow direction of the inlet gas stream, or may be a different shape, such as, for example, a cone shape.

Since the impingement surface is inclined relative to the flow direction of the inlet gas stream, the holes are distributed in the flow direction as well as in a direction perpendicular to the flow. Thus, at least some of the gas flow channels have different lengths. Specifically, the length of gas flow channel increases with radial distance from the centre of the baffle or the central axis of the inlet gas stream.

Although in the embodiments described the shape of the impingement surface causes the lengths of the gas flow channels to vary, this may alternatively be achieved by, for example, the varying the shape of exit surface 41 over which the exits from the gas flow channels are distributed.

Silencer 32, 32' also includes gas diverging member 44, which projects from baffle 36 upstream into the inlet gas stream. The gas diverging member projects along a central axis of the baffle from the narrow end of the frusto-cone. When the inlet gas stream encounters the gas diverging member its flow diverges and its flow direction gains a radial component. Thus, a gas stream may be forced to change direction on encountering a hole and before entering a gas flow channel.

Silencer 32 of the embodiment of Fig. 3a is retro-fittable to separator 30. That is, the silencer is connectable to the separator as the final stage in the assembly of the separator. The silencer is assembled to the separator by insertion through opening 24 at the top of the separator. The correct position of the silencer relative to the separator is achieved when a protruding upper flange 54 of the silencer meets an upper surface 56 of the separator.

A snap-fit connection between silencer and separator is achieved via four snap-fit connectors 46 which are resiliently deformable elongate members with barbed portions 48 at their ends. These barbed portions can flex inwardly to slide along an inner surface of the separator. When the separator is in position the connectors return to their undeformed shape, or closer to their undeformed shape, so that the barbed portions become hooked, or coupled, with the separator.

Such a snap-fit connection is only one way in which silencer 32 may be fitted to separator 30. Alternatively, the connection may be achieved by, for example, cooperating threaded portions on both silencer and separator, by interference fit, or by mechanical fastenings such as screws, nuts and bolts, rivets etc.

Once assembled, a seal is effected between silencer 32 and separator 30 by means of o-ring sealing member 50 which is positioned in groove 52 of the silencer.

Fig. 5 demonstrates the reduction of noise generated by vacuum pump oil separators that can be achieved by silencers according to embodiments of the present invention. Tests were performed on different vacuum pump and oil separator combinations in which each oil separator was initially in a clean and dry condition.

Tests 1a and 1b were performed on a first pump in combination with a first separator; tests 2a and 2b were performed on a second pump in combination with the first separator; and tests 3a and 3b were performed on a third pump in combination with a second separator.

Tests 1a, 2a and 3a were performed when an inlet gas stream was initially introduced at full flow (start-up), and tests 1b, 2b and 3b were performed at two minutes after start-up. All tests were performed both without a silencer and with a silencer according to an embodiment of the present invention.

The results show that measured noise generated by the oil separators was reduced by as much as 11dB, or 11%, when a silencer according to an embodiment of the present invention was used. Subsequent tests have shown that other silencer geometries according to embodiments of the present invention can provide significantly greater noise reductions.

## Claims

1. A silencer sub-assembly (32, 32') for a vacuum pump oil separator (30), the sub-assembly including a baffle (36) for intercepting an oil-carrying inlet gas stream (22) to the separator, the baffle having a plurality of holes (38) arranged to divide the gas stream into sub-streams, and each hole forming the entrance to a gas flow channel (42);
**characterised in that** each gas flow channel directs a respective sub-stream into the separator, and at least some of the gas flow channels have different lengths.

2. A sub-assembly according to claim 1, wherein the baffle forms an impingement surface for the inlet gas stream, the impingement surface being inclined relative to the flow direction of the inlet gas stream.

3. A sub-assembly according to claim 2, wherein the impingement surface is in the shape of a cone or frusto-cone.

4. A sub-assembly according to claim 3, wherein the cone or frusto-cone narrows in the flow direction of the inlet gas stream.

5. A sub-assembly according to any one of claims 1 to 4, further including a gas diverging member (44) which projects from the baffle upstream into the inlet gas stream.

6. A sub-assembly according to any one of claims 1 to 5, further including an exit surface (41) in which exit holes (39) for the gas flow channels are formed, the exit surface being inclined relative to the flow direction of the inlet gas stream.

7. A sub-assembly according to any one of claims 1 to 6 which is retro-fittable to the separator.

8. A sub-assembly according to claim 7, which is adapted to provide a snap-fit connection with the separator.

9. A sub-assembly according to claim 8 which has a plurality of snap-fit connection members (46) to provide the snap-fit connection.

10. A sub-assembly according to claim 9, wherein each connection member has a barbed portion (48) for coupling to the separator.

11. A sub-assembly according to any one of claims 1 to 10, wherein the sub-assembly further includes a sealing member (50) arranged to provide a seal between the sub-assembly and the separator.

12. A vacuum pump oil separator fitted with a silencer sub-assembly according to any one of claims 1 to 11.

13. A vacuum pump having a vacuum pump oil separator fitted with a silencer sub-assembly according to claim 12.

14. Use of a vacuum pump oil separator fitted with a silencer sub-assembly according to claim 12 for separating oil from an oil-carrying gas stream from a vacuum pump.

## Patentansprüche

1. Schalldämpferunteranordnung (32, 32') für einen Vakuumpumpenölabscheider (30), wobei die Unteranordnung ein Umleitelement (36) umfasst, das einen ölführenden Einlassgasstrom (22) zum Abscheider hin abfängt, wobei das Umleitelement eine Vielzahl von Löchern (28) aufweist, die zur Unterteilung des Gasstroms in Unterströme angeordnet sind, und jedes Loch den Eingang in einen Gasströmungskanal (42) bildet;
**dadurch gekennzeichnet, dass** jeder Gasströmungskanal einen entsprechenden Unterstrom in den Abscheider hinein lenkt, und dass zumindest einige der Gasströmungskanäle unterschiedliche Längen aufweisen.

2. Unteranordnung gemäß Anspruch 1, worin das Umleitelement eine Auftrefffläche für den Einlassgasstrom bildet, wobei die Auftrefffläche relativ zur Strömungsrichtung des Einlassgasstroms geneigt ist.

3. Unteranordnung gemäß Anspruch 2, worin die Auftrefffläche in Form eines Kegels oder eines Kegelstumpfes ist.

4. Unteranordnung gemäß Anspruch 3, worin der Kegel oder der Kegelstumpf sich in die Strömungsrichtung des Einlassgasstroms verengt.

5. Unteranordnung gemäß einem der Ansprüche 1 bis 4, ferner umfassend ein Gasabzweigungselement (44), das vom Umleitelement stromaufwärts in den Einlassgasstrom hinein vorsteht.

6. Unteranordnung gemäß einem der Ansprüche 1 bis 5, ferner umfassend eine Austrittsfläche (41), in der Austrittslöcher (39) für die Gasströmungskanäle ausgebildet sind, wobei die Austrittsfläche relativ zur Strömungsrichtung des Einlassgasstroms geneigt ist.

7. Unteranordnung gemäß einem der Ansprüche 1 bis 6, die mit Bezug auf den Abscheider nachrüstbar ist.

8. Unteranordnung gemäß Anspruch 7, die ausgelegt ist, eine Schnapppassungsverbindung mit dem Abscheider bereitzustellen.

9. Unteranordnung gemäß Anspruch 8, die eine Vielzahl von Schnapppassungsverbindungselementen (46) aufweist, um die Schnapppassungsverbindung bereitzustellen.

10. Unteranordnung gemäß Anspruch 9, worin jedes Verbindungselement einen Widerhakenabschnitt (48) zur Kopplung mit dem Abscheider aufweist.

11. Unteranordnung gemäß einem der Ansprüche 1 bis 10, worin die Unteranordnung ferner ein Dichtelement (50) umfasst, das zur Bereitstellung einer Abdichtung zwischen der Unteranordnung und dem Abscheider angeordnet ist.

12. Vakuumpumpenölabscheider, der mit einer Schalldämpferunteranordnung gemäß einem der Ansprüche 1 bis 11 ausgestattet ist.

13. Vakuumpumpe, die einen mit einer Schalldämpferunteranordnung ausgestatteten Vakuumpumpenölabscheider gemäß Anspruch 12 aufweist.

14. Verwendung eines Vakuumpumpenölabscheiders, der mit einer Schalldämpferunteranordnung gemäß Anspruch 12 für das Abscheiden von Öl aus einem ölführenden Gasstrom von einer Vakuumpumpe ausgestattet ist.

## Revendications

1. Sous-ensemble de silencieux (32, 32') pour un séparateur d'huile de pompe à vide (30), le sous-ensemble comprenant un déflecteur (36) pour intercepter un flux de gaz d'entrée porteur d'huile (22) par rapport au séparateur, le déflecteur ayant une pluralité de trous (38) agencés pour diviser le flux de gaz en flux auxiliaires, et chaque trou formant l'entrée d'un canal d'écoulement de gaz (42) ;
**caractérisé en ce que** chaque canal d'écoulement de gaz dirige un flux auxiliaire respectif dans le séparateur, et au moins certains des canaux d'écoulement de gaz ont des longueurs différentes.

2. Sous-ensemble selon la revendication 1, dans lequel le déflecteur forme une surface d'impact pour le flux de gaz d'entrée, la surface d'impact étant inclinée par rapport à la direction d'écoulement du flux de gaz d'entrée.

3. Sous-ensemble selon la revendication 2, dans lequel la surface d'impact a la forme d'un cône ou d'une cône tronqué.

4. Sous-ensemble selon la revendication 3, dans lequel le cône ou le cône tronqué se rétrécit dans la direction d'écoulement du flux de gaz d'entrée.

5. Sous-ensemble selon l'une quelconque des revendications 1 à 4, comprenant en outre un élément divergent de gaz (44) qui fait saillie du déflecteur en amont dans le flux de gaz d'entrée.

6. Sous-ensemble selon l'une quelconque des revendications 1 à 5, comprenant en outre une surface de sortie (41) dans laquelle des trous de sortie (39) pour les canaux d'écoulement de gaz sont formés, la surface de sortie étant inclinée par rapport à la direction d'écoulement du flux de gaz d'entrée.

7. Sous-ensemble selon l'une quelconque des revendications 1 à 6, qui peut être adapté sur le séparateur.

8. Sous-ensemble selon la revendication 7, qui est adapté pour fournir un raccordement par encliquetage avec le séparateur.

9. Sous-ensemble selon la revendication 8, qui a une pluralité d'éléments de raccordement d'encliquetage (46) pour fournir le raccordement par encliquetage.

10. Sous-ensemble selon la revendication 9, dans lequel chaque élément de raccordement a une partie à ardillons (48) pour se coupler au séparateur.

11. Sous-ensemble selon l'une quelconque des revendications 1 à 10, dans lequel le sous-ensemble comprend en outre un élément d'étanchéité (50) agencé pour fournir un joint d'étanchéité entre le sous-ensemble et le séparateur.

12. Séparateur d'huile de pompe à vide monté avec un sous-ensemble de silencieux selon l'une quelconque des revendications 1 à 11.

13. Pompe à vide ayant un séparateur d'huile de pompe à vide monté avec un sous-ensemble de silencieux selon la revendication 12.

14. Utilisation d'un séparateur d'huile de pompe à vide monté avec un sous-ensemble de silencieux selon la revendication 12, pour séparer l'huile d'un flux de gaz porteur d'huile d'une pompe à vide.
